# EUROPEAN PATENT APPLICATION

(11) **EP 2 575 204 A1**
(43) Date of publication of application: **03.04.2013**
(21) Application number: 12181368.7
(22) Date of filing: 22.08.2012
(51) Int. Cl.: H01M 8/04, H01M 8/06, H01M 8/08, H01M 8/10

(54) **Fuel battery system**

(30) Priority: 30.09.2011 JP 2011215908
(71) Applicant: Hitachi Ltd., Tokyo (JP)
(72) Inventor: Suzuki, Shuichi, Tokyo 100-8220 (JP); Onuma, Atsuhiko, Tokyo 100-8220 (JP); Kawaji, Jun, Tokyo 100-8220 (JP); Takamori, Yoshiyuki, Tokyo 100-8220 (JP); Mizukami, Takaaki, Tokyo 100-8220 (JP)
(74) Representative: Beetz & Partner

(57) **Abstract**

A fuel battery system of the present invention includes: an alkaline fuel battery (101); a fuel supply device (103) for supplying a fuel to an anode of the fuel battery; an oxidizing agent supply device (108) for supplying an oxidizing agent to a cathode of the fuel battery; a liquid supply device (106) which is connected to an oxidizing agent supply line that couples the fuel battery and the oxidizing agent supply device with each other, and supplies a liquid to the cathode; a valve (107) that is provided in a portion at which the oxidizing agent supply line and the liquid supply device are connected, and switches between fluids to be supplied to the cathode; and a control device (102) which controls the switching of the valve. The fuel battery system suppresses the neutralization of an anion-exchange electrolyte due to carbon dioxide in the air, by supplying the liquid from the liquid supply device to the cathode and making the cathode in the state of being immersed in the liquid when the fuel battery stops power generation.

## Description

### BACKGROUND OF THE INVENTION

The present invention relates to a power generation system of a fuel battery.

Along with the progress in recent electronic technology, the amount of information has increased, and the increased information needs to be processed at a higher speed with a higher function. Accordingly, a power source is needed which has a high power density and a high energy density, in other words, which has a long continuous driving period of time.

The necessity for a small generator which does not need charge, that is, a micro-generator which can easily replenish a fuel has increased. Because of such a background, the importance of the fuel battery has been investigated.

The fuel battery is a generator which contains at least a solid or a liquid electrolyte and two electrodes of anode and cathode that induce desired electrochemical reactions, and converts a chemical energy of the fuel directly into an electric energy at high efficiency.

Among such fuel batteries, an alkaline fuel battery using an anion-exchange electrolyte as disclosed in JP-A-2009-9769 does not form a strong alkaline atmosphere in the inner part of the fuel battery, as in an acid fuel battery using a cation-exchange electrolyte forms. For this reason, the alkaline fuel battery can employ a metal other than a precious metal as a catalyst, and accordingly has attracted attention.

In the alkaline fuel battery, hydrogen or alcohol such as methanol and ethanol is supplied to the anode as a fuel, and air is supplied to the cathode as an oxidizing agent. Here, the air to be supplied to the cathode contains carbon dioxide, and accordingly a problem occurs that an alkaline anion-exchange electrolyte in the vicinity of the cathode is neutralized as is shown in Formula (1), and the ion conductivity is lowered.

2OH⁻ + CO₂ → CO₃²⁻ + H₂O (1)

Here, the cathode reaction of the alkaline fuel battery is shown in Formula (2).

3O₂ + 6H₂O + 12e⁻ → 12OH⁻ (2)

As is shown in Formula (2), hydroxide ions are continuously generated in the cathode reaction during power generation, and accordingly the anion-exchange electrolyte in the vicinity of the cathode during the power generation is hard to be neutralized. On the other hand, in a stand-by state in which the power generation stops, the hydroxide ion is not supplied so that the electrolyte results in easily neutralized. When the power generation restarts, the hydroxide ion is supplied again so that the ion conductivity is enhanced, however, a very long period of time is needed until the ion conductivity recovers to the conductivity before the power generation stopped , and as a result, the starting time of the fuel battery results in being delayed.

As a technique for suppressing the neutralization when the power generation stops, there is a method, for instance, of applying a voltage to the fuel battery to make the fuel battery produce hydroxide ions, as is described in JP-A-2010-182589.

### SUMMARY OF THE INVENTION

However, the method of applying the voltage needs to supply an electric power, which results in a decrease of the efficiency of the fuel battery system. In addition, the degradation of the electrode progresses due to the application of the voltage of 1.5 V or more.

Then, an object of the present invention is to provide an alkaline fuel battery system which prevents the neutralization of the anion-exchange electrolyte in the vicinity of the cathode while power generation stops, and starts the power generation in a short period of time.

The fuel battery system which is one of the embodiments according to the present invention has a system of immersing the cathode into a liquid when an alkaline fuel battery stops the power generation. Specifically, the fuel battery system includes: an alkaline fuel battery using an anion-exchange electrolyte membrane; a fuel supply device for supplying a fuel to an anode of the alkaline fuel battery; an oxidizing agent supply device for supplying an oxidizing agent to a cathode of the alkaline fuel battery; a liquid supply device which is connected to an oxidizing agent supply line that couples the alkaline fuel battery and the oxidizing agent supply device with each other, and supplies a liquid to the cathode; a valve that is provided in a portion at which the oxidizing agent supply line and the liquid supply device are connected, and switches between a fluid which is supplied from the oxidizing agent supply device to the cathode and a fluid which is supplied from the liquid supply device to the cathode; and a control device which controls the switching of the valve, wherein the control device switches the valve so that the liquid is supplied from the liquid supply device to the cathode when the alkaline fuel battery stops power generation.

The liquid is preferably water or an aqueous solution containing at least one compound selected from the group consisting of potassium hydroxide, sodium hydroxide, potassium carbonate, sodium carbonate, potassium bicarbonate and sodium bicarbonate.

The present invention can provide a fuel battery system which prevents the neutralization of the anion-exchange electrolyte in the vicinity of the cathode while power generation stops, and starts in a short period of time.

### BRIEF DESCRIPTION OF THE DRAWINGS

FIG. 1 is a view illustrating a basic structure of a fuel battery system which uses hydrogen as a fuel, according to the present embodiment;
FIG. 2 is a view illustrating a basic structure of a fuel battery system which uses a liquid fuel as a fuel, according to the present embodiment;
FIG. 3 is a view illustrating another basic structure of a fuel battery system which uses a liquid fuel as a fuel, according to the present embodiment;
FIG. 4 is a schematic diagram of a cross section of a fuel battery according to the present embodiment;
FIG. 5 is a schematic diagram of cross sections of the fuel battery according to the present embodiment when the power generation is performed and stopped;
FIG. 6 is a schematic diagram of cross sections of the fuel battery system according to the present embodiment, at the time when the power generation is performed, stopped and restarted;
FIG. 7 is a schematic diagram of cross sections of a fuel battery system according to the present exemplary embodiment, at the time when the power generation is performed, stopped and restarted and
FIG. 8 is a view illustrating the transition of the voltage before and after the fuel battery system is stopped.

### DETAILED DESCRIPTION OF THE EMBODIMENTS

An embodiment of the present invention will be described below.

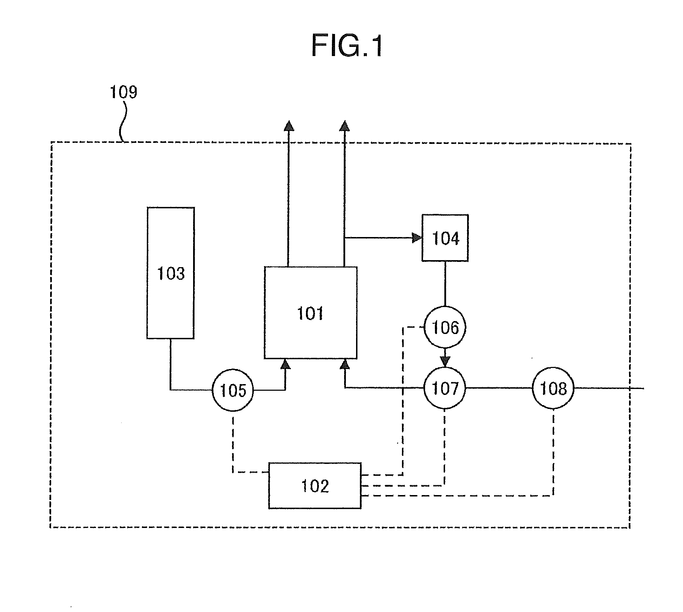

FIG. 1 is a view illustrating a basic structure of a fuel battery system 109 which uses hydrogen as a fuel, according to the present invention. Incidentally, a similar structure can be used also in the case in which another fuel than hydrogen is used, when the fuel battery system uses gas as the fuel. Hydrogen is supplied to an anode of an alkaline fuel battery 101 from a hydrogen tank 103 by a hydrogen supply device 105. In addition, air is supplied to a cathode of the alkaline fuel battery 101 by an air supply device 108, the power generation is performed, and at the same time, an excessive hydrogen and air are discharged to the outside of the fuel battery system 109. To a pipe which couples the alkaline fuel battery 101 with the air supply device 108 (hereinafter referred to as an air supply line), a pipe which is coupled with a liquid tank 104 is connected, and is configured so that a liquid in the liquid tank 104 can be supplied to the cathode through the air supply line by a liquid supply device 106. Incidentally, a valve 107 is provided at a connecting portion of the pipe, at which the air supply line and the liquid tank 104 are coupled, and the fuel battery system can switch between the fluid to be supplied to the cathode from the air supply device 108 and the fluid to be supplied to the cathode from the liquid supply device 106, by switching the valve 107.

In the fuel battery system 109 of the present embodiment, the valve 107 is controlled so that the air is supplied from the air supply device 108 to the cathode when the power generation is performed in the alkaline fuel battery 101. On the other hand, when the power generation of the alkaline fuel battery 101 stops, the fuel battery system switches the valve 107 so that the liquid is supplied from the liquid supply device 106 to the cathode, and makes the cathode in a state of being immersed in the liquid, by supplying the liquid to the cathode of the fuel battery 101. Thus, the fuel battery system suppresses the neutralization of an anion-exchange electrolyte due to carbon dioxide in the air, by making the cathode in the state of being immersed in the liquid when the power generation stops. When the power generation is restarted, air is supplied from the air supply device 108 to the cathode by switching of the valve 107. At this time, the liquid which exists in the cathode is extruded to the outside by the pressure of the supplied air, and is returned to the liquid tank 104. Incidentally, operations of the hydrogen supply device 105, the air supply device 108, the valve 107 and the liquid supply device 106 are controlled by a control device 102.

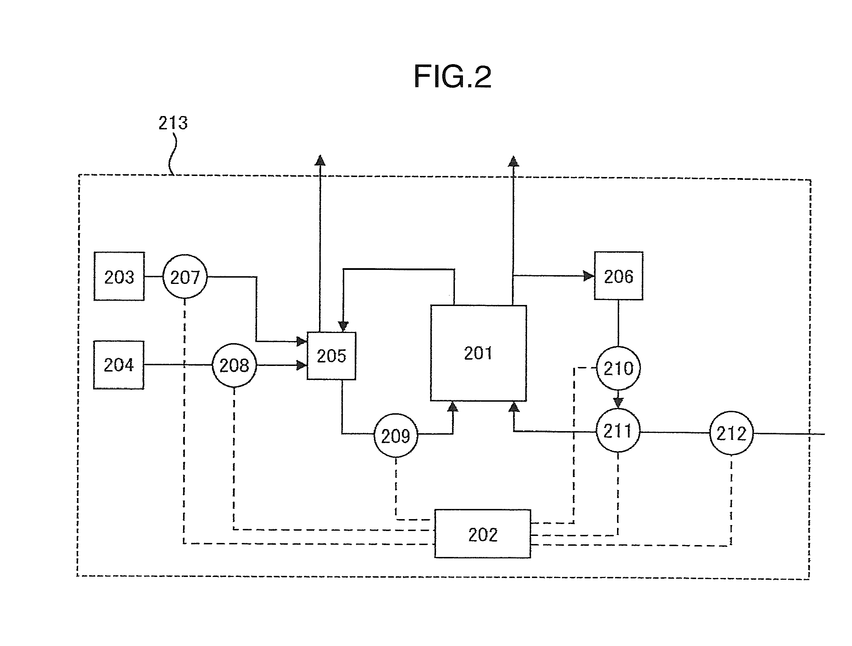

FIG. 2 is a view illustrating a basic structure of a fuel battery system 213 which uses methanol as a fuel, according to the present invention. Incidentally, a similar structure can be used also in the case in which another fuel such as ethanol is used, when the fuel battery system uses a liquid as the fuel. Water and methanol are carried from a water tank 203 and a methanol tank 204 to a mixing tank 205 by a water supply device 207 and a methanol supply device 208, respectively. An aqueous solution with a proper concentration of methanol is prepared in the mixing tank 205, and is supplied to an anode of an alkaline fuel battery 201 by an aqueous methanol solution pump 209. In addition, air is supplied to the cathode of the alkaline fuel battery 201 by an air supply device 212, and the power generation is performed. Furthermore, carbon dioxide is produced in the anode side of the alkaline fuel battery 201 due to the power generation, and an aqueous solution of excessive methanol and an exhaust gas containing the carbon dioxide as a main component are returned to the mixing tank 205. After that, the exhaust gas is discharged from the fuel battery system 213. In addition, an excessive air discharged from the cathode of the alkaline fuel battery 201 is discharged to the outside of the fuel battery system 213.

A pipe which is coupled with a liquid tank 206 is connected to the air supply line which couples the alkaline fuel battery 201 with the air supply device 212 similarly to those in FIG. 1, and is configured so that the liquid in the liquid tank 206 can be supplied from the air supply line to the cathode by a liquid supply device 210. Thereby, the fuel battery system can switch between the fluid to be supplied from the air supply device 212 to the cathode and the fluid to be supplied from the liquid supply device 210 to the cathode, by switching a valve 211. In addition, operations of the methanol supply device 207, the air supply device 208, the aqueous methanol solution supply device 209, the air supply device 212, the valve 211 and the liquid supply device 210 are controlled by a control device 202.

The switching of the valve 211 when the power generation is performed, stopped and restarted is controlled in the same way as described in FIG. 1. Accordingly, the fuel battery system 213 illustrated in FIG. 2 also can suppress the neutralization of the anion-exchange electrolyte due to the carbon dioxide in the air, by making the cathode in the state of being immersed in the liquid when the power generation stops.

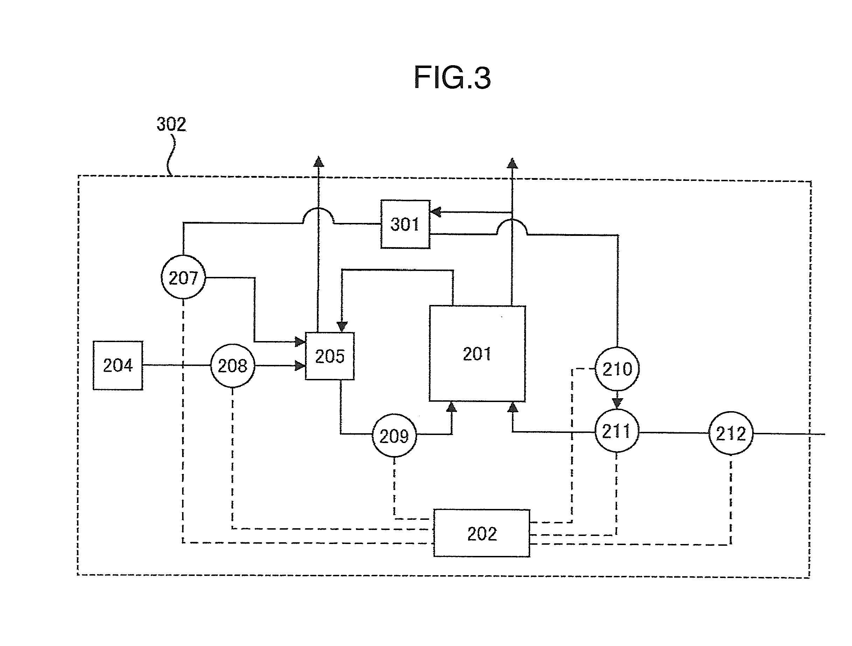

In addition, a basic structure of a fuel battery system 302 of another embodiment according to the present invention is illustrated in FIG. 3, which uses methanol as the fuel. The fuel battery system 302 of the present embodiment has a system structure in which water is used as a liquid with which the cathode of the alkaline fuel battery 201 is filled. It is a point different from the system illustrated in FIG. 2 that the present system is configured so that a tank for storing water to be supplied to the mixing tank 205 and a tank for storing water to be supplied to the cathode of the fuel battery 201 are common as a water tank 301. By providing such a structure, it becomes possible to simplify the fuel battery system 302.

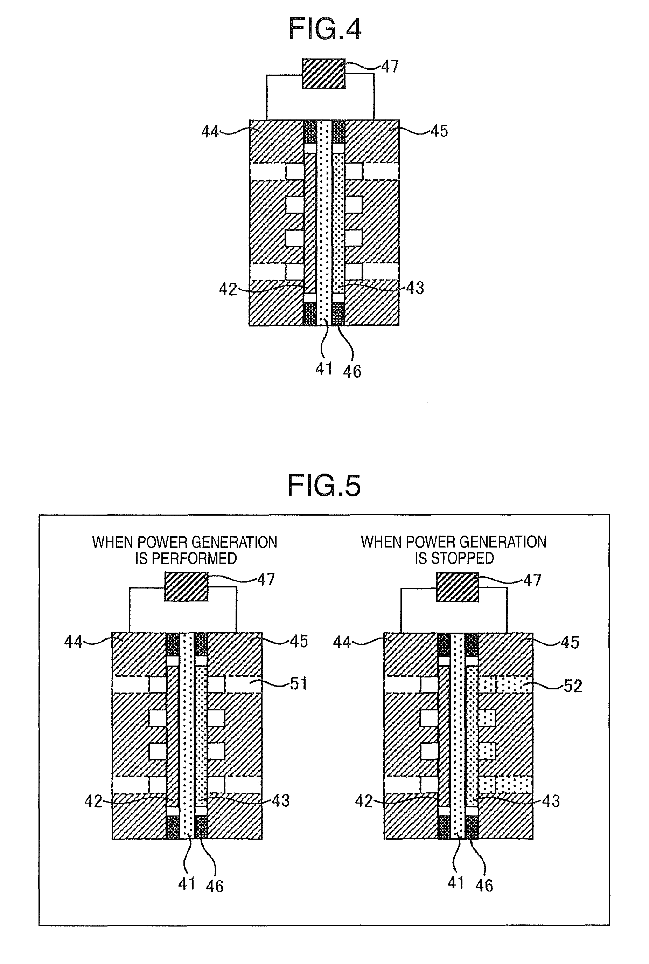

Next, a schematic diagram of a cross section of an alkaline fuel battery used for the fuel battery systems described in FIGS. 1 to 3 is illustrated in FIG. 4. An anode 42 is arranged on one face of an anion-exchange electrolyte membrane 41, and a cathode 43 is arranged on the other face thereof. An anode collector plate 44 is arranged on the outer side of the anode 42, and a cathode collector plate 45 is arranged on the outer side of the cathode 43 so that the both plates sandwich a membrane electrode assembly which includes the anion-exchange electrolyte membrane 41, the anode 42 and the cathode 43, and the assembly is sealed with a gasket 46. In addition, the anode collector plate 44 and the cathode collector plate 45 are electrically connected to an external circuit 47. Here, the anode 42 is an electrode which contains a catalyst that oxidizes the fuel and contains an anion-exchange electrolyte. The catalyst of the anode 42 is not particularly limited as long as the catalyst has a catalytic activity of oxidizing the fuel, but can employ platinum, palladium, ruthenium, iron, cobalt, nickel and the like as the material, when hydrogen, methanol or ethanol is used as the fuel. In addition, these catalysts may be supported by a carbon support of carbon black, activated carbon or the like. In addition, the cathode 43 is an electrode which contains a catalyst that reduces oxygen and contains an anion-exchange electrolyte. The catalyst of the cathode 43 is not particularly limited as long as the catalyst has a catalytic activity of reducing oxygen, but can employ platinum, gold, palladium, iron, cobalt, nickel and the like as the material. The catalyst may be supported by a carbon support similarly to the anode 43. In addition, the anion-exchange electrolyte contained in the anode 42 and the cathode 43, and the anion-exchange electrolyte membrane 41 are not particularly limited as long as they have characteristics which conduct the anion therethrough, but a high polymer material is preferably used as the material, which has an anion exchange group such as a quaternary ammonium group, a quaternary phosphonium group and a quaternary pyridinium group. In addition, materials to be used for the anion-exchange electrolyte contained in the anode 42 and the cathode 43 and for the anion-exchange electrolyte membrane 41 may be the same or different from each other. In addition, though not being illustrated, a diffusion layer may be arranged between the anode 42 and the anode collector 44, and between the cathode 43 and the cathode collector 45. Here, carbon paper, carbon cloth or the like can be used for the diffusion layer. In addition, the anode collector 44 and the cathode collector 45 are provided with flow paths for supplying the fuel and an oxidizing agent to the anode and the cathode therethrough, respectively. A member which constitutes the flow path may be formed so as to be integral with the collector, or may be provided as a separate member.

FIG. 5 illustrates a schematic diagram of the cross sections of the fuel battery when the power generation is performed and when the power generation is stopped. In the cathode 43 of the fuel battery, air 51 which contains oxygen is supplied when the power generation is performed. On the other hand, a liquid 52 is supplied when the power generation is stopped, the flow path in the cathode side is filled with the liquid 52, and the cathode 43 is in the state of being immersed in the liquid 52. By the liquid 52 supplied to the flow path, the cathode 43 becomes a state of not coming in contact with the air, and thereby the fuel battery system can suppress the neutralization of the anion-exchange electrolyte due to the carbon dioxide in the air. The liquid 52 to be used here is preferably water (in which a component in the atmosphere may be dissolved), or an aqueous solution which contains at least one compound selected from the group consisting of potassium hydroxide, sodium hydroxide, potassium carbonate, sodium carbonate, potassium bicarbonate and sodium bicarbonate. Incidentally, a concentration of these compounds is preferably in a range of 0 to 1 mol/l. It is not preferable that the concentration of the compound is excessively high, because in the case in which the environment such as temperature has changed, the compound has a possibility of depositing as a solid and exerting a bad influence on the fuel battery system. The liquid 52 to be used here is most preferably water, and preferably contains as little ionic component as possible. At this time, a component in the atmosphere may be dissolved in the water. By containing no ion component, the liquid can lower the solubility of carbon dioxide therein, and thereby can suppress the neutralization of the anion-exchange electrolyte when the cathode 43 has been filled with the liquid. Incidentally, when the water contains the ion component, the concentration of the ion component is preferably adjusted so that the electric conductivity of the water becomes 0.1 MΩ or more. In addition, when the water contains the ion component, it is necessary to make the solution alkaline. By controlled to be alkaline, the solution can suppress the neutralization of the anion-exchange electrolyte, because a sufficient amount of hydroxide ions exists in the solution, even if the carbon dioxide dissolves and carbonic acid is produced. The degree of alkalinity is preferably 10 or more in pH.

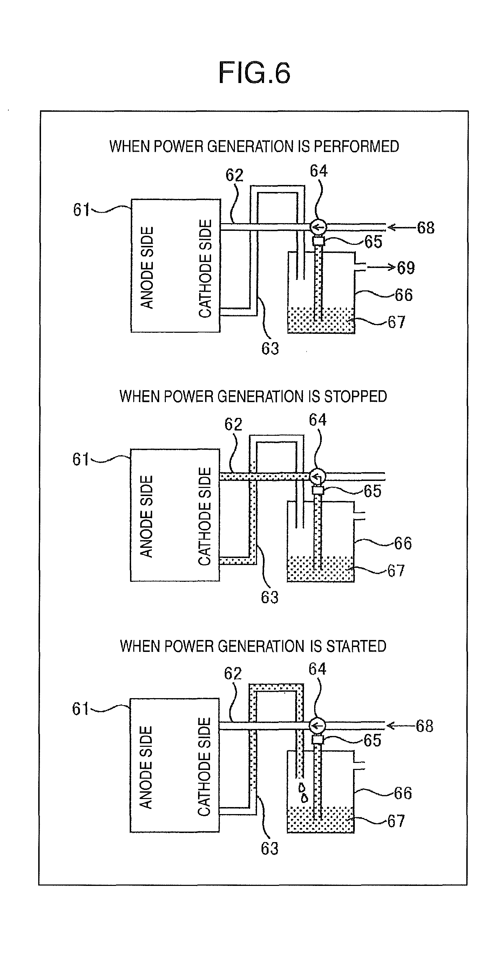

The fuel battery system of the present embodiment supplies the liquid to the cathode from the liquid supply device, by switching the valve provided in the air supply line by a control device. Means for supplying the liquid to the cathode in the fuel battery system of the present embodiment will be described in detail with reference to FIG. 6. FIG. 6 illustrates a schematic diagram of cross sections of the fuel battery system according to the present embodiment, at the time when the power generation is performed, stopped and restarted. When the power generation is performed, a valve 64 provided in an air supply line 62 is opened toward the direction of the arrow, and the air 68 is supplied to the cathode of an alkaline fuel battery 61 by an air supply device such as a blower, which is not illustrated. The air discharged from the cathode of the alkaline fuel battery 61 reaches the upper side of a liquid tank 66 through a pipe 63, and is discharged as an exhaust gas 69.

When the power generation has been finished and then is stopped, the valve 64 is opened toward the direction of the arrow, and at the same time, a liquid 67 is carried to the alkaline fuel battery 61 by a liquid-sending pump 65. Here, the liquid-sending pump 65 is stopped when the pump has carried the liquid 67 the amount of which is equal to or exceeds the volume of the air supply line 62, the volume of the flow path in the cathode side in the fuel battery 61 and the volume of the pipe 63. The pipe 63 is arranged so as to pass through a position higher than the top portion of the flow path in the cathode side in the fuel battery 61, and the flow path in the cathode side in the alkaline fuel battery 61 is filled with the liquid 67 still after the liquid-sending pump 65 is stopped.

When the power generation is started, the valve 64 is opened toward the direction of the arrow and the air 68 is supplied by the blower. Thereby, the liquid 67 with which a pipe 62, the alkaline fuel battery 61 and the pipe 63 have been filled is extruded by the air 68, and is returned to the liquid tank 66.

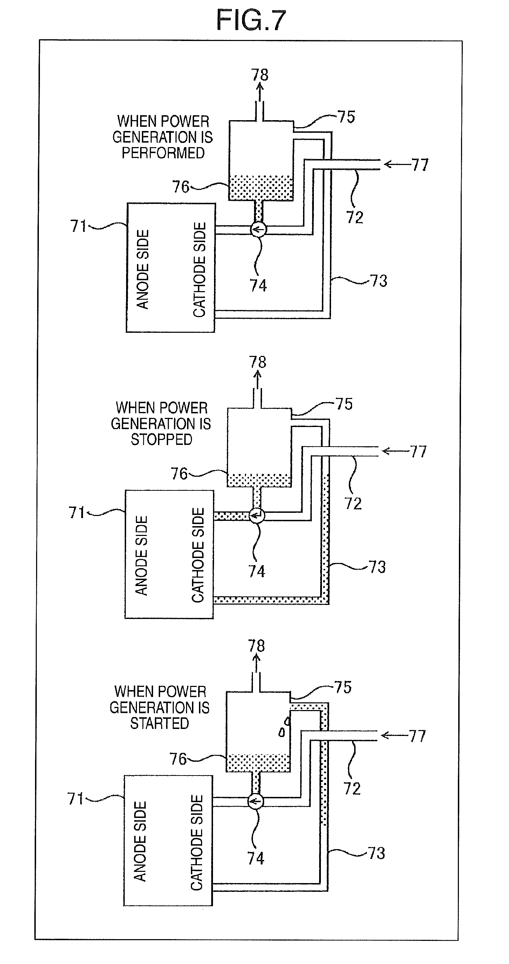

In addition, FIG. 7 illustrates another schematic diagram of cross sections of the fuel battery system according to the present embodiment when the power generation is performed, stopped and started. When the power generation is performed, a valve 74 provided in an air supply line 72 is opened toward the direction of an arrow, and air 77 is supplied to the cathode of an alkaline fuel battery 71 by an air supply device such as a blower, which is not illustrated. The air discharged from the cathode of the alkaline fuel battery 71 reaches a liquid tank 75 through a pipe 73, and is discharged as an exhaust gas 78.

When the power generation is finished and then stopped, the valve 74 is opened toward the direction of the arrow, and at the same time, a liquid 76 is carried to the alkaline fuel battery 71 by gravity. Here, a part of a pipe 73 is filled with the liquid 76 so that the height becomes the same height as the liquid level in the fuel tank 76.

When the power generation is started, the valve 74 is opened toward the direction of the arrow and the air 77 is supplied by a blower. Thereby, the liquid 76 with which an air supply line 72, the alkaline fuel battery 71 and the pipe 73 have been filled is extruded by the air 77, and is returned to the liquid tank 75.

Due to such a configuration that the liquid tank of FIG. 7 is installed at a position higher than the alkaline fuel battery, the cathode of the alkaline fuel battery can be filled with the liquid, without the use of a liquid-sending pump.

In the fuel battery system according to the present embodiment, a series of operations are repeated as described above, and when the power generation is stopped, the fuel battery system prevents the carbon dioxide in the air from coming in contact with the cathode, and can suppress the neutralization of the anion-exchange electrolyte of the cathode.

The embodiments of the fuel battery system of the present invention will be specifically described below with reference to an embodiment.

### (Embodiment 1)

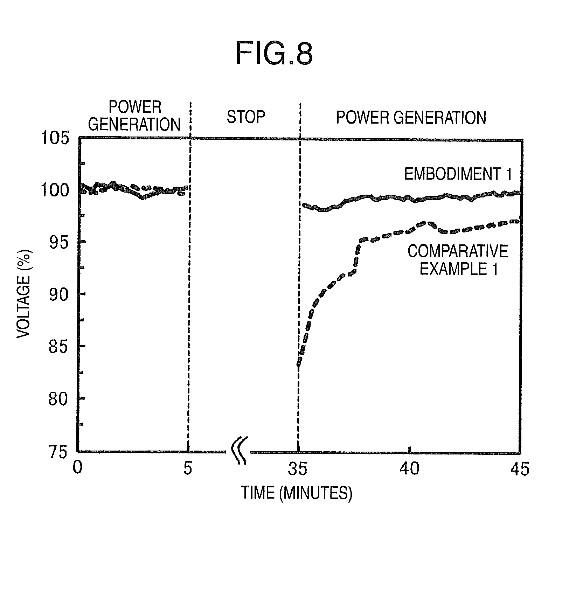

A membrane/electrode assembly was produced by applying a slurry which was prepared by mixing a catalyst that is platinum supported by carbon, an anion-exchange electrolyte and a solvent, to both sides of an anion-exchange electrolyte membrane. Next, a fuel battery according to the present embodiment was produced by sandwiching the obtained membrane/electrode assembly with collectors through a carbon cloth which is a diffusion layer. Next, hydrogen with a dew point of 60°C was supplied to an anode of the fuel battery, air with a dew point of 60°C was supplied to a cathode, and power generation was performed for 5 minutes at a current density of 50 mA/cm² and at a battery temperature of 60°C. After that, the power generation was stopped, water was supplied to the cathode, and then the fuel battery system was left in the state for 30 minutes. Incidentally, the supply of hydrogen to the anode was continued. After that, air was supplied to the cathode to extrude the water, and then the power generation was again performed for 10 minutes at a current density of 50 mA/cm². A voltage at this time when the power generation was performed is illustrated in FIG. 8 in which the average voltage obtained during the power generation for 5 minutes before stopped is regarded as 100%. In the present embodiment, the voltage obtained after the stop for 30 minutes was almost the same as that before the stop. This is considered to be because the fuel battery system could suppress the neutralization of the anion-exchange electrolyte of the cathode due to the carbon dioxide in the air, by having filled the cathode with water. Incidentally, the water used in the present embodiment was a deionized water which was kept in the atmosphere.

### (Comparative Example 1)

The power generation was performed in a similar way to that in Embodiment 1 except that when the power generation was stopped, water was not supplied to the cathode but the supply of air was continued. A voltage at this time when the power generation was performed is illustrated in FIG. 8 in which the average voltage obtained during the power generation for 5 minutes before stopped is regarded as 100%. In the present comparative example, the voltage decreased by 15% or more by the stop of the power generation for only 30 minutes, and then the voltage started increasing along with the power generation, but the voltage did not return to the value shown before the power generation was stopped, even after continuing the power generation for 10 minutes. It is considered that the decrease of the voltage after the power generation was stopped occurred because the anion-exchange electrolyte of the cathode was neutralized by the carbon dioxide in the air when the power generation was stopped so that it needs a long period of time for the voltage to be recovered.

Thus, the present invention can provide a fuel battery system which can start in a short period of time, because the same voltage as that before the power generation was stopped can be immediately obtained when the power generation is started from the state that the power generation was stopped.

The present invention relates to the fuel battery system which uses the alkali exchange electrolyte, and such fuel battery system can be used for various generating apparatuses.

It should be further understood by those skilled in the art that although the foregoing description has been made on embodiments of the invention, the invention is not limited thereto and various changes and modifications may be made without departing from the spirit of the invention as defined by the scope of the appended claims. The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A fuel battery system (109, 213, 302) comprising:
an alkaline fuel battery (101, 201) using an anion-exchange electrolyte membrane (41);
a fuel supply device (105, 208) for supplying a fuel to an anode (42) of the alkaline fuel battery;
an oxidizing agent supply device (108, 212) for supplying an oxidizing agent (51, 68, 77) to a cathode (43) of the alkaline fuel battery;
a liquid supply means (106, 207) which is connected to an oxidizing agent supply line (62, 72) that couples the alkaline fuel battery and the oxidizing agent supply device with each other, and supplies a liquid (52, 67, 76) to the cathode;
a valve (107, 211, 64) that is provided in a portion at which the oxidizing agent supply line and the liquid supply means are connected, and switches between a fluid which is supplied from the oxidizing agent supply device to the cathode and a fluid which is supplied from the liquid supply means to the cathode; and
a control device (102, 202) which controls the switching of the valve, wherein
the control device switches the valve so that the liquid is supplied from the liquid supply means to the cathode when the alkaline fuel battery stops power generation.

2. The fuel battery system according to claim 1, wherein the liquid is water or an aqueous solution containing at least one selected from a group consisting of potassium hydroxide, sodium hydroxide, potassium carbonate, sodium carbonate, potassium bicarbonate and sodium bicarbonate.

3. The fuel battery system according to claim 1 or 2, wherein the liquid has a pH of 10 or more.

4. The fuel battery system according to one of claims 1 - 3, further comprising:
a water tank for storing water therein; a fuel tank for storing a liquid fuel therein;
and a mixing tank for mixing the water of the water tank and the liquid fuel of the fuel tank with each other therein,
wherein an aqueous solution in the mixing tank is supplied to the anode of the alkaline fuel battery by the fuel supply means.

5. The fuel battery system according to claim 4, wherein the water in the water tank is supplied to the cathode of the alkaline fuel battery by the liquid supply means when the power generation stops.

6. The fuel battery system according to one of the preceding claims, wherein the liquid supply means comprises a liquid tank for holding the liquid therein, and has a pipe for returning an exhaust gas or the liquid discharged from the cathode to the liquid tank therethrough.

7. The fuel battery system according to claim 6, wherein the liquid tank is installed at a position higher than the alkaline fuel battery and the liquid in the liquid tank is supplied to the cathode by use of gravity.

8. The fuel battery system according to claim 6 or 7, wherein the control device switches the valve so that the oxidizing agent is supplied from the oxidizing agent supply device to the cathode, and extrude the liquid immersing the cathode therein by a pressure of the oxidizing agent which is supplied to the cathode, when the alkaline fuel battery starts the power generation.

9. The fuel battery system according to one of claims 6 - 8, wherein the liquid tank comprises an exhaust port for discharging the exhaust gas to an outside.

10. The fuel battery system according to one of claims 6 - 9, wherein the liquid supply means comprises a pump for supplying the liquid held in the liquid tank to the cathode.
